# FASCICULE DE BREVET EUROPEEN

(11) **EP 2 037 759 B1**
(45) Date de publication et mention de la délivrance du brevet: **13.01.2010**
(21) Numéro de dépôt: 07766030.6
(22) Date de dépôt: 11.05.2007
(51) Int. Cl.: A23L 1/01, A47J 27/16

(54) **PROCÉDÉ POUR LE TRAITEMENT THERMIQUE D'ALIMENTS ET DISPOSITIF POUR SA MISE EN OEUVRE**
VERFAHREN ZUR WÄRMEBEHANDLUNG VON LEBENSMITTELPRODUKTEN UND VORRICHTUNG ZUR DURCHFÜHRUNG DIESES VERFAHRENS
PROCESS FOR THE HEAT TREATMENT OF FOOD PRODUCTS AND DEVICE FOR CARRYING OUT SAID PROCESS

(30) Priorité: 11.05.2006 FR 0651696
(43) Date de publication de la demande: 25.03.2009
(73) Titulaire: Cuisi Koncept Easy Cook, Société À Responsabilité, 89200 Avallon (FR)
(72) Inventeur: MADELAINE, Christian, 67400 Illkirch Graffenstaden (FR)
(74) Mandataire: Rhein, Alain
(86) Numéro de dépôt international: PCT/FR2007/051252
(87) Numéro de publication internationale: WO 2007/132114

(56) Documents cités:
- EP-A1- 1 066 762
- FR-A1- 2 462 103
- US-A- 4 137 337
- US-A- 5 662 959

## Description

La présente invention a trait à un procédé pour le traitement thermique d'aliments ainsi qu'à un dispositif permettant de mettre en oeuvre ce procédé.

Cette invention concerne le domaine du traitement thermique, notamment la cuisson, d'une quantité importante d'aliments à la fois, plus particulièrement dans le cadre de la préparation, de manière industrielle, d'aliments en vrac.

L'on connaît, d'ores et déjà, un certain nombre de procédés conçus pour assurer un tel traitement thermique.

En fait, un tel traitement thermique a pour but de transformer un aliment, plus particulièrement une partie au moins de la chaîne protéinique de cet aliment, voire l'intégralité de cette chaîne protéinique en cas de cuisson.

A ce propos, on observera que, malgré la multitude des techniques de traitement existantes, une telle transformation n'est pas encore suffisamment maîtrisée et aucune de ces techniques ne permet, véritablement, à ce jour, d'obtenir un aliment cuit de manière homogène, présentant une tendreté optimale, ayant conservé son jus et ses sucs (notamment de viande), permettant une bonne conservation de l'aliment et présentant des caractéristiques organoleptiques optimales.

En fait, aucune de ces techniques ne permet, véritablement, de maîtriser la technique de traitement en raison de l'absence de contrôle total de la température (résultant de l'absence d'homogénéité de l'aliment et de l'absence de maîtrise de la montée en température), de l'absence de contrôle de l'interface entre l'aliment et son milieu environnant ainsi que des pertes non maîtrisées au cours du processus.

De ce fait, aucune de ces différentes techniques ne permet d'aboutir à un résultat convaincant qui soit connu et reproductible.

Un autre inconvénient de ces techniques consiste en ce que la durée du traitement thermique (notamment de la cuisson) est relativement long, plus particulièrement lorsque le traitement est effectué à des températures basses, notamment dans le cadre de la cuisson de produits conditionnés sous vide ou cuits à la vapeur.

Finalement, on observera que le type de chauffage employé en vue d'assurer le traitement thermique influe de manière notable sur la qualité des aliments traités qui dépend, en fait, des températures de cuisson (les pertes augmentent avec la température de chauffage), de la durée de chauffage liée au transfert de chaleur (les pertes augmentent avec la durée de chauffage à température constante), de l'interface entre les aliments et leur environnement ainsi que des caractéristiques géométriques et de la structure de ces aliments.

Parmi ces différentes techniques de traitement thermique, il est, en particulier, connu un procédé de traitement de produits alimentaires par malaxage sous vide décrit dans le document EP-1.066.762. Ce procédé consiste en ce qu'après la phase de préparation par malaxage sous vide, on soumet les produits à des étapes alternées de mise sous vide et de chauffage pendant une durée suffisante pour provoquer un déshydratation partielle du produit par évaporation d'une certaine quantité d'eau que contient le produit après la phase de préparation.

Ce procédé présente un certain nombre d'inconvénients consistant, notamment, en ce que la déshydratation est difficilement maîtrisable et peut entraîner un dessèchement excessif du produit nuisant à ses qualités gustatives.

Un autre inconvénient consiste en ce que ce procédé nécessite d'alterner les étapes de mise sous vide et de chauffage. Outre le fait qu'il est nécessaire de multiplier l'alternance de ces étapes, celles-ci sont, également, très longues et ont une durée comprise entre 30 minutes et une heure.

Finalement, ce procédé consomme une quantité importante d'énergie au cours de son déroulement ce qui renchérit considérablement le coût de revient des aliments traités.

La présente invention se veut de remédier aux inconvénients des procédés de l'état de la technique.

A cet effet, l'invention concerne un procédé pour le traitement thermique d'aliments consistant à disposer ces aliments dans une enceinte, à faire le vide dans cette enceinte et à procéder au chauffage de ces aliments. Ce procédé est caractérisé par le fait que :
- on ajoute à ces aliments une solution liquide avant de faire le vide dans l'enceinte ;
- après avoir fait ce vide, on procède au chauffage des aliments en injectant un fluide caloriporteur dans l'enceinte maintenue sous vide et en rotation ;
- lorsque les aliments ont atteint une température limite déterminée Tl, on casse le vide dans l'enceinte et on poursuit le chauffage des aliments en injectant le fluide caloriporteur dans l'enceinte en rotation jusqu'à ce que ces aliments atteignent une température de référence déterminée Tr ;
- lorsque les aliments ont atteint cette température de référence Tr, les aliments sont chauffés en étant maintenus à cette température Tr dans l'enceinte en rotation pendant une durée déterminée Dr avant d'interrompre le procédé.

Selon une autre caractéristique de ce procédé, la solution liquide est ajoutée aux aliments à hauteur de 10 à 15% en masse de ces aliments, cette solution présentant une densité comprise entre 1.15 et 1.39 à 20°C.

En fait, cette solution liquide comporte de l'eau additionnée d'amidon, de sel, d'un gélifiant et/ou d'un produit collagène et peut être constituée par une gélatine ou une solution d'amidon pré-gélatinisé.

Une caractéristique additionnelle consiste en ce que le fluide caloriporteur injecté est constitué par de l'air chaud, de la vapeur d'eau ou analogue.

Selon une autre caractéristique, l'enceinte est maintenue sous vide pendant une durée déterminée qui est supérieure ou égale à la durée de chauffage des aliments. Cette durée de chauffage des aliments est, d'une part, déterminé en fonction de la taille des morceaux de ces aliments et, d'autre part, comprise entre 2 et 40 minutes.

Finalement et selon une caractéristique additionnelle, la quantité de fluide caloriporteur injecté est déterminée en fonction de la durée de chauffage Dc, de la température, notamment de la température limite Tl et/ou de la température de référence Tr, et du poids des aliments, voire encore du poids de la solution liquide.

La présente invention concerne, également, un dispositif pour la mise en oeuvre du procédé de traitement thermique d'aliments tel que décrit ci-dessus.

Les avantages de la présente invention consistent en ce que le procédé combine plusieurs techniques de traitement selon un enchaînement préalablement défini, étudié et parfaitement contrôlé et maîtrisé.

Un autre avantage consiste en ce que les aliments sont additionnés d'une solution liquide qui permet de maîtriser les phénomènes thermiques au niveau de la surface des aliments, plus particulièrement en gérant les phénomènes thermiques au niveau de l'interface entre ces aliments et cette solution liquide.

Le procédé permet, en injectant un fluide caloriporteur sur des produits en vrac dans une enceinte sous vide, d'accélérer les phénomènes thermiques rencontrés en temps normal, sous pression atmosphérique lors des traitements traditionnels.

L'accélération de ces phénomènes à basse température permet de créer, à la surface des aliments, une coque protéinique formant une barrière et maintenant le jus à l'intérieur de ces aliments. Ce maintien permet, avantageusement et à une température plus élevée, de diminuer la température de dénaturation des protéines et d'accélérer les réactions de transformations de ces protéines. Un tel maintien de jus permet, également, d'améliorer les qualités organoleptiques des aliments.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant au dessin joint en annexe et dans lequel :

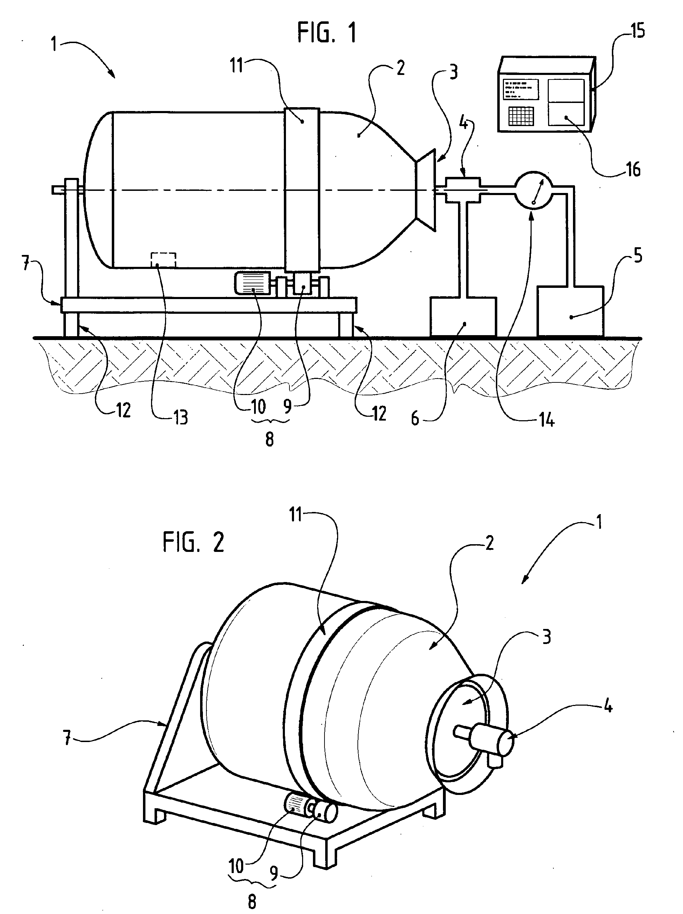

- la figure 1 est une vue schématisée et de côté du dispositif permettant la mise en oeuvre du procédé conforme à l'invention ;
- la figure 2 est une vue schématisée et en perspective de ce dispositif.

La présente invention concerne le domaine du traitement thermique, notamment la cuisson, d'une quantité importante d'aliments à la fois. Cette invention trouvera une application toute particulière dans le cadre de la préparation, de manière industrielle, d'aliments en vrac.

En fait, cette invention concerne, plus particulièrement, un procédé pour le traitement thermique d'aliments ainsi qu'un dispositif conçu pour assurer un tel traitement thermique et, plus spécifiquement, agencé pour la mise en oeuvre de ce procédé.

Un tel traitement thermique consiste, tout d'abord, à disposer dans une enceinte des aliments se présentant, notamment, sous une forme en vrac.

Avant ou après avoir disposé ces aliments dans ladite enceinte, ce procédé consiste à ajouter à ces aliments une solution liquide en sorte que ces aliments baignent, au moins en partie, dans cette solution liquide et à l'intérieur de ladite enceinte.

A ce propos, il convient d'observer que, selon une autre caractéristique de ce procédé, cette solution liquide est choisie, définie et quantifiée en fonction de l'aliment à traiter thermiquement.

Ainsi, cette solution liquide est ajoutée aux aliments à hauteur de 10 à 25% en masse de ces aliments.

Une telle solution liquide présente une densité comprise entre 1.15 et 1.39 à 20°C.

En fait, une telle solution est, de préférence, réalisée à base d'eau laquelle est, notamment selon la nature des aliments à traiter, additionnée d'amidon, de sel (pour la réalisation d'une saumure), d'un gélifiant et/ou d'un produit collagène.

Un mode particulier de réalisation consiste en ce qu'un aliment constitué par une viande peut être additionné d'une solution liquide (aqueuse) constituée par une gélatine ou une solution d'amidon pré-gélatinisé.

Il convient d'observer que la présence de cette solution liquide dans laquelle baigne les aliments permet d'établir, à l'interface d'un tel aliment, un écoulement laminaire, parallèle à la surface de cet aliment, et qui est, usuellement, dénommé couche limite.

C'est, notamment, de cette couche limite (plus particulièrement de son épaisseur) que dépend :
- l'évaporation de l'eau des aliments et, par conséquent, l'allure de la montée en température des aliments ;
- la résistance au transfert convectif de la chaleur entre la solution et l'aliment, et, par conséquent, l'évolution de la température de surface de ces aliments.

La présente invention permet, en fait, de maîtriser, parfaitement, les contraintes imposées par cette couche limite, ceci au travers de la maîtrise des caractéristiques (adaptation de la composition de cette solution liquide aux aliments traités) et des paramètres (quantité de solution liquide) définissant la solution liquide.

Une telle maîtrise permet de gérer, de manière appropriée, l'évolution du traitement thermique des aliments et d'obtenir des résultats réguliers et reproductifs.

Selon une autre caractéristique de l'invention, le procédé consiste, encore, à faire le vide dans l'enceinte contenant les aliments et la solution liquide et, après avoir fait ce vide, à procéder au chauffage des aliments en injectant un fluide caloriporteur dans l'enceinte maintenue sous vide et en rotation, ceci jusqu'à une température limite Tl qui est comprise entre 55 et 70°C, de préférence de l'ordre de 60 à 65°C.

A ce propos, on observera que le vide dans l'enceinte est réalisé, de préférence, jusqu'à une pression de consigne Pc d'environ -0.9 bars et, ceci, alors que cette enceinte est encore immobile (vide statique).

Après établissement de ce vide, l'enceinte est entraînée en rotation à une vitesse comprise entre 0.05 et 2 tours par minute, de préférence entre 0.1 et 1 tour par minute. Une telle rotation permet, avantageusement, de répartir la solution de manière uniforme au niveau des aliments.

On observera que le fait d'injecter un fluide caloriporteur dans une enceinte sous vide contenant des aliments en vrac permet d'accélérer les phénomènes de réaction rencontrés en temps normal, sous pression atmosphérique et lors de traitements thermiques (notamment des cuissons) traditionnels.

En fait, le profil d'évolution de la température à coeur des aliments en fonction du temps dans le cadre d'un traitement thermique sous vide conforme à l'invention est, avantageusement, diminué par un coefficient de 10 au moins par rapport à un traitement thermique en atmosphère.

A ce propos, on observera que, pendant cette phase d'ascension rapide de la température, les phénomènes de réaction de transformation des protéines des aliments sont, au moins en partie, accélérées.

En effet, la réalisation du vide dans l'enceinte permet de reproduire des réactions de transformation de ces protéines se réalisant en atmosphère libre à 100°C, à des températures moindres, notamment de l'ordre de 60°C. En fait, la réalisation de ce vide dans l'enceinte permet à ces protéines d'être dénaturées et de coaguler à basse température. Le traitement thermique peut, alors, être assimilé à une cuisson braisée intense, c'est-à-dire, une cuisson couverte, à température douce et en présence d'un liquide.

L'accélération des phénomènes de transformation des protéines permet, en fait, la création rapide d'une coque protéinique à la surface des aliments. Cette coque protéinique forme une barrière et maintient le jus à l'intérieur des aliments, notamment de la viande.

Un tel mode de réalisation permet, avantageusement, de diminuer substantiellement les pertes de jus de cuisson qui, de manière avantageuse, sont équivalentes à celles observées dans le cadre d'une cuisson à 60°C en atmosphère.

Cette limitation des pertes du fait de la présence de cette coque permet, ultérieurement et au cours du procédé de traitement thermique, de maîtriser les caractéristiques de la couche limite.

Selon une autre caractéristique de l'invention, l'injection de fluide caloriporteur, le rétablissement du vide (après injection de ce fluide) et l'entraînement en rotation à une certaine vitesse de l'enceinte sont assurés conformément à des phases et/ou à des sous-phases successives au cours desquelles la vitesse d'entraînement, la durée, la pression et/ou la quantité de fluide injectées peuvent être différentes. Les paramètres de ces différentes phases et sous-phases sont déterminés avec précision pour un type d'aliment, ceci pour l'obtention d'un résultat optimal. C'est au travers de la stricte reproduction de ces paramètres que, pour un même aliment, le résultat obtenu est identique, standardisé et prévisible.

En fait, ces paramètres peuvent être programmés et être utilisés pour un pilotage automatique (notamment par informatique), ceci de manière à pouvoir reproduire parfaitement le procédé pour un même type d'aliment.

Selon une autre caractéristique de l'invention, le procédé consiste en ce que, lorsque les aliments ont atteint la température limite déterminée Tl, on casse le vide dans l'enceinte et on poursuit le chauffage des aliments en injectant le fluide caloriporteur dans l'enceinte en rotation jusqu'à ce que ces aliments atteignent une température de référence déterminée Tr, de préférence comprise entre 70 et 95°C.

A ce propos, on observera que, au-delà de la température limite Tl (plus particulièrement entre la température limite Tl et la température de référence Tr), l'injection de fluide caloriporteur est assurée de manière continue dans une enceinte à pression atmosphérique ou sous pression.

L'apport de chaleur par injection du fluide caloriporteur permet une poursuite du traitement thermique des protéines et assure la coagulation des protéines myofibrillaires ainsi que la solubilisation du collagène.

Selon une autre caractéristique de l'invention, le procédé consiste, finalement et lorsque les aliments ont atteint ladite température de référence Tr, à chauffer ces aliments en les maintenant à cette température Tr dans l'enceinte en rotation pendant une durée déterminée Dr, ceci avant d'interrompre le procédé.

On observera que ce maintien à cette température de référence Tr est, de préférence, assuré sans apport d'énergie, plus particulièrement après avoir interrompu l'injection de fluide caloriporteur.

En fait et selon une caractéristique additionnelle, la durée Dr pendant laquelle les aliments sont maintenus à la température de référence Tr est comprise entre 1 et 3 minutes, de préférence de l'ordre de 2 minutes.

De manière plus générale concernant le procédé conforme à la présente invention et tel qu'évoqué ci-dessus, le chauffage des aliments est assuré en injectant, à l'intérieur de l'enceinte, un fluide caloriporteur. Une tel fluide caloriporteur est constitué par de l'air chaud, de la vapeur d'eau (mode de réalisation préféré de l'invention, cette vapeur d'eau étant, plus particulièrement, à une température de l'ordre de 100°C) ou analogue.

En ce qui concerne la pression d'injection de ce fluide caloriporteur, celle-ci est comprise entre 1.2 et 2.5 bars.

Tel qu'évoqué ci-dessus, l'enceinte (contenant les aliments et la solution liquide) est entraînée en rotation durant toute la durée du traitement thermique (durée de chauffage Dc) des aliments et, notamment, pendant toute la durée d'injection de fluide caloriporteur (dans l'enceinte sous vide et après rupture du vide). Un tel mode de réalisation permet, avantageusement, à la solution liquide d'être répartie uniformément au niveau des aliments et, du fait de la maîtrise du traitement thermique, d'assurer un transfert de chaleur approprié.

En fait et selon un mode préféré de réalisation de l'invention, l'enceinte est entraînée en rotation à une vitesse comprise entre 0.05 et 2 tours par minute, de préférence entre 0.1 et 1 tour par minute.

A ce propos, on observera que la vitesse de rotation de cette enceinte peut varier en fonction du stade du procédé, plus particulièrement en fonction des phases et/ou des sous-phases de ce procédé. Ainsi, le procédé peut consister en une succession de phases (et/ou de sous-phases) pour lesquelles la vitesse de rotation peut être différente, ceci lorsque l'enceinte est sous vide (tel que susmentionné) et, également, après que ce vide ait été rompu.

Tel qu'évoqué ci-dessus, le procédé consiste à assurer le chauffage des aliments pendant une durée totale Dc, cette durée correspondant à celle pendant laquelle les aliments sont chauffés sous vide D'c, à celle pendant laquelle ces aliments sont chauffés après rupture du vide (et entre la température limite Tl et la température de référence Tr) ainsi qu'à celle (Dr) pendant laquelle les aliments sont maintenus à cette température de référence Tr.

A ce propos, on observera que cette durée totale de chauffage Dc est déterminée en fonction de la taille des morceaux des aliments, cette durée Dc étant comprise entre 2 minutes (plus particulièrement pour des aliments présentant une petite longueur, par exemple de 2 millimètres, comme du riz) et 35 à 40 minutes (plus particulièrement pour des aliments présentant une taille de l'ordre de 90 millimètres et/ou un volume de l'ordre de 50 cm3, comme par exemple des morceaux de viande), de préférence 37 minutes.

En fait, cette durée de chauffage Dc est sensiblement proportionnelle à la taille des aliments à chauffer et détermine, ainsi, la quantité de fluide caloriporteur qu'il convient d'injecter pour assurer le traitement thermique de ces aliments.

Il convient d'observer que le procédé conforme à la présente invention permet d'assurer le traitement thermique d'une quantité importante (poids important, notamment compris entre 20 et 800 kilos) d'aliments, ceci de manière simultanée.

A ce propos, on observera que le traitement thermique d'une quantité déterminée d'aliments nécessite l'apport d'une quantité déterminée de calories sous la forme d'un volume déterminé de fluide caloriporteur injecté de sorte que la quantité de fluide caloriporteur injecté pour assurer le traitement thermique d'aliments doit être déterminé en fonction du poids de ces aliments, voire encore du poids de la solution liquide.

Selon une autre caractéristique de l'invention, la quantité de fluide caloriporteur injecté est, encore, déterminée en fonction de la température, notamment de la température limite Tl et/ou de la température de référence Tr.

Selon une autre caractéristique de l'invention, le procédé consiste à maintenir l'enceinte, contenant les aliments à traiter, sous vide pendant une durée déterminée qui est supérieure ou égale à la durée de chauffage des aliments.

Tel qu'évoqué ci-dessus, le procédé de traitement thermique consiste à maintenir les aliments sous vide pendant une durée déterminée Dv. A ce propos, on observera que cette durée Dv débute au moment où le vide a atteint sa valeur de consigne Pc (au cours de l'étape de mise sous vide de l'enceinte) et s'achève lorsque (après injection de fluide caloriporteur dans l'enceinte sous vide) ce vide est totalement rompu pour la température limite Tl.

Ainsi et selon un premier mode de réalisation de l'invention, le procédé consiste à maintenir l'enceinte, contenant les aliments à traiter, sous vide pendant une durée déterminée Dv qui est supérieure ou égale à la durée de chauffage totale Dc des aliments.

Il convient, cependant, d'observer que le procédé consiste à maintenir les aliments sous un vide optimal à une pression de consigne Pc (de l'ordre de -0.9 bars tel que susmentionné) pendant une durée D'v débutant au moment où le vide a atteint sa valeur de consigne Pc (au cours de l'étape de mise sous vide de l'enceinte) et s'achevant au moment de l'injection du fluide caloriporteur. A partir de ce début d'injection de fluide, le vide (tout en étant maintenu) évolue et est progressivement rompu (sans l'être totalement) sous l'effet de l'injection de ce fluide, ceci jusqu'à être définitivement rompu lorsque les aliments ont atteint la température limite déterminée Tl.

On observera, également, que le chauffage des aliments est assuré pendant une durée D'c débutant au moment de l'injection de fluide caloriporteur et s'achevant au moment de la rupture définitive du vide, lorsque les aliments ont atteint la température limite déterminée Tl.

Aussi et selon un mode préféré de réalisation de l'invention, le procédé consiste, alors, à maintenir l'enceinte, contenant les aliments à traiter, sous vide pendant une durée déterminée D'v qui est supérieure ou égale à la durée de chauffage D'c de ces aliments.

Ainsi et dans le déroulement du procédé selon l'invention, on détermine, tout d'abord, la durée de chauffage Dc, D'c des aliments en fonction des paramètres susmentionnés de manière à pouvoir déterminer la durée de réalisation du vide Dv, D'v pour, ensuite, lancer le procédé de traitement thermique de ces aliments, notamment en établissement le vide dans cette enceinte.

Tel qu'évoqué ci-dessus, le procédé de traitement thermique d'aliments conforme à la présente invention se traduit par une succession de phases et de sous-phases pour lesquelles différents paramètres (températures Tl, Tr, durées des phases et/ou sous-phases, durées du vide Dv, D'v, durées de chauffage Dc, D'c, durée, pression et quantité d'énergie apportée, vitesse de rotation de l'enceinte...) peuvent varier.

Les caractéristiques de ces phases, sous-phases et de ces paramètres sont déterminées, notamment de manière empirique, de manière à rendre le traitement thermique optimal c'est-à-dire de manière à améliorer la tendreté tout en évitant le dessèchement, ceci pour tous les produits alimentaires susceptibles d'être soumis au procédé de traitement thermique conforme à l'invention.

Le déroulement de ces phases et sous-phases ainsi que la valeur des paramètres qui y correspondent constituent, en fait, un programme de traitement thermique des aliments (spécifique à chaque type d'aliment) qui peut faire l'objet d'une base de données, notamment enregistrée dans une mémoire associée au dispositif, notamment conçu pour mettre en oeuvre le procédé conforme à la présente invention.

C'est, également, à un tel programme de traitement thermique qu'il va être fait appel pour la gestion et/ou le pilotage d'un dispositif conçu pour mettre en oeuvre le procédé conforme à la présente invention.

Finalement, ce procédé consiste, encore, en ce que l'on relève périodiquement la pression du vide, la température et le poids des aliments, pour ajuster le vide et/ou les paramètres de chauffage, notamment la quantité et la durée d'injection de fluide caloriporteur.

Un tel ajustement est assuré conformément à un programme de traitement thermique prédéterminé (voir ci-dessus) ce qui permet au procédé de traitement thermique d'aboutir à un résultat reproductible et standardisé.

Il convient, également, de préciser que le procédé, objet de la présente invention, permet d'assurer un traitement thermique d'aliments pouvant, selon le cas, consister à assurer :
- le blanchiment d'aliments consistant à coaguler les protéines de surface sur 0.5 à 1mm en vue de faciliter la préhension des morceaux et éviter la prise en masse pendant la stérilisation ;
- la pré-cuisson consistant à obtenir des produits qui soient techniquement cuits (protéines coagulés) mais pas mangeables (texture inappropriée à la consommation, aliment encore ferme) ;
- la cuisson consistant à atteindre une diminution marquée de la dureté musculaire sans engendrer de modifications trop importantes des caractéristiques du tissu musculaire.

Tel qu'évoqué ci-dessus, le procédé permet, avantageusement, une limitation des pertes de jus de cuisson, plus particulièrement au cours de la phase de chauffage des aliments sous vide.

On observera que cette limitation des pertes peut, encore, être améliorée, soit en chauffant à une température comprise entre celle de la solubilisation du collagène et celle de la coagulation totale et irréversible des protéines, soit en intervenant sur le pH de la solution liquide pour le rendre différent de celui pHi des protéines, notamment de la viande.

Le procédé selon l'invention permet, également, d'accélérer la solubilisation du collagène ce qui permet de favoriser l'augmentation de la viscosité et/ou de la densité du jus interne des aliments.

L'ensemble de ces phénomènes (limitation des pertes et accélération de la solubilisation du collagène) a pour effet :
- un transfert thermique amélioré à l'intérieur du produit en raison d'une plus importante agitation moléculaire ;
- une accélération des réactions de transformation, notamment des protéines, due à la diminution de la température de dénaturation de ces protéines en raison de l'augmentation de la teneur en eau ;
- une limitation des pertes d'énergie en raison de la limitation des pertes de jus qui auraient tendance à migrer vers l'extérieur des aliments en entraînant de l'énergie ;
- une amélioration des qualités organoléptiques en raison du maintien dans le jus des aliments (notamment de la viande) de la quasi-totalité des protéines et autres composants qui sont responsables du goût naturel des aliments ;
- une diminution marquée de la dureté musculaire sans engendrer de modifications trop importante des caractéristiques du tissu musculaire.

Selon une autre caractéristique et tel qu'évoqué ci-dessus, l'invention concerne, encore, un dispositif 1 pour le traitement thermique d'aliments, un tel dispositif 1 étant, plus particulièrement, conçu pour mettre en oeuvre le procédé décrit ci-dessus.

A ce propos et tel que visible sur les figures en annexe, un tel dispositif 1 comporte une enceinte 2 destinée à recevoir les aliments à traiter ainsi que la solution liquide.

Cette enceinte 2 adopte, par exemple, une forme cylindrique et comporte un système d'ouverture 3 permettant son chargement. Ce système d'ouverture 3 est refermé pendant le déroulement du procédé et adopte la forme d'un couvercle ou analogue, notamment équipé d'un joint étanche. On observera que ce système d'ouverture 3 (voire un conduit qui y est associé) reçoit des moyens de raccordement 4, d'une part, à une pompe à vide 5 et, d'autre part, à un moyen 6 pour fournir un fluide caloriporteur que comporte ce dispositif 1. De tels moyens de raccordement 4 comportent un joint tournant ou sont, au moins en partie, constitués par un raccord tournant ou analogue.

Ce dispositif 1 comporte, encore, un châssis 7 sur lequel ladite enceinte 2 est montée en rotation ainsi qu'un moyen 8 d'entraînement en rotation de cette enceinte 2. Un tel moyen 8 d'entraînement en rotation adopte, par exemple, la forme d'une roue de friction 9 entraînée par un moteur 10 à variateur et apte à coopérer avec une zone de friction 11 que présente ladite enceinte 2 au niveau de sa périphérie.

Ledit dispositif 1 comporte, de plus, des moyens 12 pour relever le poids d'au moins le contenu de l'enceinte 2. Ces moyens 12 sont constitués par au moins un peson 12 (mais de préférence par une pluralité de ces pesons 12, notamment quatre) sur lequel ou sur lesquels repose le châssis 7 de ce dispositif 1.

Ce dispositif 1 comporte, également, des moyens 13 pour relever la température à l'intérieur de l'enceinte 2 constitués par une sonde de température ou analogue.

Le dispositif 1 comporte, encore, des moyens 14 pour relever la pression régnant à l'intérieur de cette enceinte 2 et constitués par un manomètre, un pressostat ou analogue.

Finalement, ce dispositif 1 comporte des moyens 15 de gestion du déroulement du procédé de traitement thermique.

De tels moyens de gestion 15 comportent une mémoire 16 à l'intérieur de laquelle sont enregistrés les caractéristiques susmentionnées des phases, des sous-phases, et des paramètres qui y correspondent.

Ces moyens 15 de gestion sont raccordés :
- à la pompe à vide 5 ;
- au moyen 6 de fourniture de fluide calorifique ;
- au moteur 10 d'entraînement de l'enceinte 2 ;
- aux moyens 12 pour relever le poids ;
- aux moyens 13 pour relever la température ;
- aux moyens 14 pour relever la pression ;

Ces moyens de gestion 15 comportent des moyens pour piloter ladite pompe à vide 5, le moyen 6 de fourniture de fluide caloriporteur ainsi que le moteur 12, ceci en fonction des paramètres relevés par les moyens 12, 13 et 14 ainsi qu'en fonction des caractéristiques susmentionnées des phases, des sous-phases, et des paramètres qui y correspondent et figurant dans ladite mémoire 16.

De tels moyens de gestion 15 peuvent adopter la forme d'un automate programmable, d'une système informatique ou analogue.

I1 est donné, dans la suite de la description, des exemples de traitements thermiques d'aliments conformes à la présente invention et s'apparentant à une recette de traitement d'un tel aliment.

### Recette du sauté de veau :

- on introduit les morceaux de veau (de taille comprise entre 20 et 40 mm, notamment sous forme de cubes) ainsi que la solution liquide (gelée de collagène de veau) à l'intérieur de l'enceinte 2 ;
- on fait le vide à l'intérieur de l'enceinte 2 pendant une durée D'v de 20 minutes, l'enceinte 2 étant maintenue à température ambiante ;
- on injecte de la vapeur d'eau à l'intérieur de l'enceinte 2 en rotation (0,3 tours/minute) en vue de l'élévation en température du contenu de l'enceinte 2 ;
- lorsque la température des aliments atteint 60° (Tl), le vide est rompu et la cuisson continue en atmosphère libre tout en injectant de la vapeur d'eau dans l'enceinte 2 en rotation jusqu' à atteindre une température de référence Tr de 89°C ;
- la cuisson est considérée achevée lorsque la température de référence Tr est stabilisée pendant deux minutes consécutives.

### Recette du filet de poulet :

- on introduit les morceaux de filets de poulet (par exemple des morceaux d'environ 100 grammes, notamment d'une taille d'environ 10cm*6cm*1cm) dans l'enceinte 2 ;
- on ajoute une solution liquide à raison d'environ 15% en poids de la viande, essentiellement une solution liquide saline (sel à raison d'environ 10 grammes par kilo de viande) ;
- on fait le vide à l'intérieur de l'enceinte 2 pendant une durée D'v d'environ 3h50 ;
- à l'issue de cette durée D'v, on injecte de la vapeur d'eau à l'intérieur de l'enceinte 2 pendant une durée D'c de 10 minutes à l'issue de laquelle le vide est rompu (la durée totale de vide Dv est, alors, de 4 heures tandis que la température Tl est de l'ordre de 68 à 70°C) ;
- après rupture du vide, on poursuit le chauffage des aliments au-delà de la température Tl en injectant de la vapeur d'eau pendant 15 minutes pour une durée totale d'injection de vapeur Dc de 25 minutes (la température de référence Tr est, alors, d'environ 85°C et la durée Dr de maintien à cette température Tr est de 2 minutes) ;
- l'enceinte 2 est entraînée en rotation à 0,3 tours/minute au moins pendant l'injection de vapeur d'eau.

## Revendications

1. Procédé pour le traitement thermique d'aliments consistant à disposer ces aliments dans une enceinte (2), à faire le vide dans cette enceinte (2) et à procéder au chauffage de ces aliments, **caractérisé par le fait que** :
- on ajoute à ces aliments une solution liquide avant de faire le vide dans l'enceinte (2) ;
- après avoir fait ce vide, on procède au chauffage des aliments en injectant un fluide caloriporteur dans l'enceinte (2) maintenue sous vide et en rotation ;
- lorsque les aliments ont atteint une température limite déterminée (Tl), on casse le vide dans l'enceinte (2) et on poursuit le chauffage des aliments en injectant le fluide caloriporteur dans l'enceinte (2) en rotation jusqu'à ce que ces aliments atteignent une température de référence déterminée (Tr) ;
- lorsque les aliments ont atteint cette température de référence (Tr), les aliments sont chauffés en étant maintenus à cette température (Tr) dans l'enceinte (2) en rotation pendant une durée déterminée (Dr) avant d'interrompre le procédé.

2. Procédé pour le traitement thermique d'aliments selon la revendication 1, **caractérisé par le fait que** la solution liquide est ajoutée aux aliments à hauteur de 10 à 25% en masse de ces aliments.

3. Procédé pour le traitement thermique d'aliments selon l'une quelconque des revendications précédentes, **caractérisé par le fait que** la solution liquide présente une densité comprise entre 1.15 et 1.39 à 20°C.

4. Procédé pour le traitement thermique d'aliments selon l'une quelconque des revendications précédentes, **caractérisé par le fait que** la solution liquide comporte de l'eau additionnée d'amidon, de sel, d'un gélifiant et/ou d'un produit collagène.

5. Procédé pour le traitement thermique d'aliments selon l'une quelconque des revendications précédentes, **caractérisé par le fait que** la solution liquide est constituée par une gélatine ou une solution d'amidon pré-gélatinisé.

6. Procédé pour le traitement thermique d'aliments selon l'une quelconque des revendications précédentes, **caractérisé par le fait que** le fluide caloriporteur injecté est constitué par de l'air chaud, de la vapeur d'eau ou analogue.

7. Procédé pour le traitement thermique d'aliments selon l'une quelconque des revendications précédentes, **caractérisé par le fait que** le fluide caloriporteur est injecté à une pression comprise entre 1.2 et 2.5 bars.

8. Procédé pour le traitement thermique d'aliments selon l'une quelconque des revendications précédentes, **caractérisé par le fait que** l'enceinte (2) est entraînée en rotation à une vitesse comprise entre 0.05 et 2 tours par minute, de préférence entre 0.1 et 1 tour par minute, ceci pendant toute la durée de chauffage (Dc) des aliments.

9. Procédé pour le traitement thermique d'aliments selon l'une quelconque des revendications précédentes, **caractérisé par le fait que**, au-delà de la température limite (Tl), l'injection de fluide caloriporteur est assurée de manière continue dans une enceinte (2) à pression atmosphérique ou sous pression.

10. Procédé pour le traitement thermique d'aliments selon l'une quelconque des revendications précédentes, **caractérisé par le fait que** la température limite déterminée (Tl) est comprise entre 55 et 70°C tandis que la température de référence (Tr) est comprise entre 70 et 95°C.

11. Procédé pour le traitement thermique d'aliments selon l'une quelconque des revendications précédentes, **caractérisé par le fait que** la durée (Dr) pendant laquelle les aliments sont maintenus à la température de référence (Tr) est comprise entre 1 et 3 minutes, de préférence 2 minutes.

12. Procédé pour le traitement thermique d'aliments selon l'une quelconque des revendications précédentes, **caractérisé par le fait que** l'enceinte (2) est maintenue sous vide pendant une durée déterminée (Dv ; D'v) qui est supérieure ou égale à la durée de chauffage (Dc ; D'c) des aliments.

13. Procédé pour le traitement thermique d'aliments selon l'une quelconque des revendications précédentes, **caractérisé par le fait que** les aliments sont chauffés pendant une durée (Dc) déterminée en fonction de la taille des morceaux de ces aliments, cette durée (Dc) étant comprise entre 2 et 40 minutes.

14. Procédé pour le traitement thermique d'aliments selon l'une quelconque des revendications précédentes, **caractérisé par le fait que** la quantité de fluide caloriporteur injecté est déterminée en fonction de la durée de chauffage (Dc), de la température, notamment de la température limite (Tl) et/ou de la température de référence (Tr), et du poids des aliments, voire encore du poids de la solution liquide.

15. Procédé pour le traitement thermique d'aliments selon l'une quelconque des revendications précédentes, **caractérisé par le fait que** l'on relève périodiquement la pression du vide, la température et le poids des aliments, pour ajuster le vide et/ou les paramètres de chauffage, notamment la quantité et la durée d'injection de fluide caloriporteur.

16. Dispositif (1) destiné à la mise en oeuvre du procédé selon l'une quelconque des revendications précédentes,
**caractérisé par le fait qu'**il comporte :
- une enceinte (2) destinée à recevoir les aliments à traiter selon ce procédé ainsi que la solution liquide ;
- un châssis (7) sur lequel ladite enceinte (2) est montée en rotation ;
- un moyen (8) d'entraînement en rotation de cette enceinte (2) ;
- une pompe à vide (5) ;
- un moyen (6) pour fournir un fluide caloriporteur ;
- des moyens (12) pour relever le poids d'au moins le contenu de l'enceinte (2) ;
- des moyens (13) pour relever la température à l'intérieur de l'enceinte (2) ;
- des moyens (14) pour relever la pression régnant à l'intérieur de cette enceinte (2) ;
- des moyens (15) de gestion du déroulement du procédé de traitement thermique,

## Claims

1. Process for heat treatment of food products consisting in arranging these food products in a tank (2), creating a vacuum in this tank (2) and proceeding to heating these food products, wherein :
- a liquid solution is added to these food products before crating a vacuum in the tank (2) ;
- after having created this vacuum, heating of the food products is proceeded to by injecting a heat-transport medium into the tank (2) maintained under vacuum and rotating ;
- when the food products have reached a determined limit temperature (Tl), the vacuum in the tank (2) is removed and the heating of the food products is continued by injecting the heat-transport medium into the rotating tank (2) until these food products reach a determined reference temperature (Tr) ;
- when the food products have reached this reference temperature (Tr), the food products are heated while being maintained at this temperature (Tr) in the rotating tank (2) for a determined period (Dr) before stopping the process.

2. Process for heat treatment of food products according to claim 1, wherein the liquid solution is added to the food products at a level of 10 to 25% of the mass of these food products.

3. Process for heat treatment of food products according to any of the preceding claims, wherein the liquid solution has a density varying between 1.15 and 1.39 at 20°C.

4. Process for heat treatment of food products according to any of the preceding claims, wherein the liquid solution includes water added with starch, salt, a gelling agent and/or a collagen product.

5. Process for heat treatment of food products according to any of the preceding claims, wherein the liquid solution is comprised of gelatine or a pre-gelatinised starch solution.

6. Process for heat treatment of food products according to any of the preceding claims, wherein the injected heat-transport medium is comprised of hot air, water vapour or the like.

7. Process for heat treatment of food products according to any of the preceding claims, wherein the heat-transport medium is injected at a pressure varying between 1.2 and 2.5 bar.

8. Process for heat treatment of food products according to any of the preceding claims, wherein the tank (2) is driven in rotation at a speed varying between 0.05 and 2 revolutions per minute, preferably between 0.1 and 1 revolution per minute, this during the whole heating period (Dc) of these food products.

9. Process for heat treatment of food products according to any of the preceding claims, wherein, beyond the limit temperature (Tl), the injection of heat-transport medium is ensured continuously in a tank (2) at atmospheric pressure or under pressure.

10. Process for heat treatment of food products according to any of the preceding claims, wherein the determined limit temperature (Tl) varies between 55 and 70°C, while the reference temperature (Tr) varies between 70 and 95°C.

11. Process for heat treatment of food products according to any of the preceding claims, wherein the period (Dr) during which the food products are maintained at the reference temperature (Tr) varies between 1 and 3 minutes, is preferably 2 minutes.

12. Process for heat treatment of food products according to any of the preceding claims, wherein the tank (2) is maintained under vacuum for a determined period (Dv ; D'v) that is longer than or equal to the heating period (Dc ; D'c) of the food products.

13. Process for heat treatment of food products according to any of the preceding claims, wherein the food products are heated for a period (Dc) determined depending on the size of the pieces of these food products, this period (Dc) varying between 2 and 40 minutes.

14. Process for heat treatment of food products according to any of the preceding claims, wherein the quantity of injected heat-transport medium is determined depending on the heating period (Dc), the temperature, namely the limit temperature (Tl) and/or the reference temperature (Tr), and the weight of the food products, even on the weight of the liquid solution.

15. Process for heat treatment of food products according to any of the preceding claims, wherein the vacuum pressure, the temperature and the weight of the food products are periodically measured, in order to adjust the vacuum and/or the heating parameters, namely the quantity and the duration of injection of heat-transport medium.

16. Device (1) for implementing the process according to any of the preceding claims, wherein the device includes :
- a tank (2) for receiving the food products to be treated according to this process as well as the liquid solution ;
- a frame (7) on which said tank (2) is rotationally mounted ;
- means (8) for driving this tank (2) in rotation ;
- a vacuum pump (5) ;
- means (6) for supplying heat-transport medium ;
- means (12) for measuring the weight of at least the content of the tank (2) ;
- means (13) for measuring the temperature inside the tank (2) ;
- means (14) for measuring the pressure inside this tank (2) ;
- means (15) for controlling the progress of the process for heat treatment.

## Patentansprüche

1. Verfahren zur Wärmebehandlung von Lebensmittelprodukten, darin bestehend, dass diese Lebensmittelprodukte in einen Behälter (2) angeordnet werden, ein Vakuum in diesem Behälter (2) hergestellt wird, und das Erwärmen dieser Lebensmittelprodukte vorgenommen wird, **dadurch gekennzeichnet, dass** :
- diesen Lebensmittelprodukten eine flüssige Lösung zugefügt wird, bevor ein Vakuum im Behälter (2) hergestellt wird ;
- nachdem dieses Vakuum hergestellt wurde, die Erwärmung der Lebensmittelprodukte vorgenommen wird, indem ein wärmeabführendes Fluidum in den unter Vakuum und in Drehung gehaltenen Behälter (2) eingespritzt wird ;
- wenn die Lebensmittelprodukte eine bestimmte Grenztemperatur (T1) erreicht haben, das Vakuum im Behälter (2) aufgehoben und die Erwärmung der Lebensmittelprodukte fortgesetzt wird, indem das wärmeabführende Fluidum in den drehenden Behälter (2) eingespritzt wird, bis diese Lebensmittelprodukte eine bestimmte Bezugstemperatur (Tr) erreichen ;
- wenn die Lebensmittelprodukte diese Bezugstemperatur (Tr) erreicht haben, die Lebensmittelprodukte erwärmt werden, während sie während einer bestimmten Zeitperiode (Dr) auf dieser Temperatur (Tr) in dem drehenden Behälter (2) gehalten werden, bevor das Verfahren unterbrochen wird.

2. Verfahren zur Wärmebehandlung von Lebensmittelprodukten nach Anspruch 1, **dadurch gekennzeichnet, dass** die flüssige Lösung den Lebensmittelprodukten im Bereich von 10 bis 25% der Masse dieser Lebensmittelprodukte zugefügt wird.

3. Verfahren zur Wärmebehandlung von Lebensmittelprodukten nach irgendeinem der vorgehenden Ansprüche, **dadurch gekennzeichnet, dass** die flüssige Lösung eine bei 20°C zwischen 1,15 und 1,39 liegende Dichte hat.

4. Verfahren zur Wärmebehandlung von Lebensmittelprodukten nach irgendeinem der vorgehenden Ansprüche, **dadurch gekennzeichnet, dass** die flüssige Lösung Wasser mit Zufügung von Stärke, Salz, einem Geliermittel und/oder einem Kollagenprodukt umfaßt.

5. Verfahren zur Wärmebehandlung von Lebensmittelprodukten nach irgendeinem der vorgehenden Ansprüche, **dadurch gekennzeichnet, dass** die flüssige Lösung aus Gelatine oder einer vorverkleisterten Stärkelösung besteht.

6. Verfahren zur Wärmebehandlung von Lebensmittelprodukten nach irgendeinem der vorgehenden Ansprüche, **dadurch gekennzeichnet, dass** das eingespritzte wärmeabführende Fluidum aus Heißluft, Wasserdampf oder dergleichen besteht.

7. Verfahren zur Wärmebehandlung von Lebensmittelprodukten nach irgendeinem der vorgehenden Ansprüche, **dadurch gekennzeichnet, dass** das wärmeabführende Fluidum bei einem zwischen 1,2 und 2,5 Bar liegenden Druck eingespritzt wird.

8. Verfahren zur Wärmebehandlung von Lebensmittelprodukten nach irgendeinem der vorgehenden Ansprüche, **dadurch gekennzeichnet, dass** der Behälter (2) mit einer Geschwindigkeit in Drehung angetgrieben wird, die zwischen 0,05 und 2 Umdrehungen pro Minute, vorzugsweise zwischen 0,1 und 1 Umdrehung pro Minute liegt, und zwar während der ganzen Erwärmungsdauer (Dc) dieser Lebensmittelprodukte.

9. Verfahren zur Wärmebehandlung von Lebensmittelprodukten nach irgendeinem der vorgehenden Ansprüche, **dadurch gekennzeichnet, dass** das Einspritzen von wärmeabführendem Fluidum über die Grenztemperatur (T1) hinaus in einem Behälter (2) bei Luftdruck oder unter Druck kontinuierlich gesichert wird.

10. Verfahren zur Wärmebehandlung von Lebensmittelprodukten nach irgendeinem der vorgehenden Ansprüche, **dadurch gekennzeichnet, dass** die bestimmte Grenztemperatur (T1) zwischen 55 und 70°C liegt, während die Bezugstemperatur (Tr) zwischen 70 und 95°C liegt.

11. Verfahren zur Wärmebehandlung von Lebensmittelprodukten nach irgendeinem der vorgehenden Ansprüche, **dadurch gekennzeichnet, dass** die Zeit (Dr), während der die Lebensmittelprodukte auf Bezugstemperatur (Tr) gehalten werden zwischen 1 und 3 Minuten, vorzugsweise bei 2 Minuten, liegt.

12. Verfahren zur Wärmebehandlung von Lebensmittelprodukten nach irgendeinem der vorgehenden Ansprüche, **dadurch gekennzeichnet, dass** der Behälter (2) während einer bestimmten Zeit (Dv ; D'v) unter Vakuum gehalten wird, die länger als oder gleich der Erwärmungsdauer (Dc ; D'c) der Lebensmittelprodukte ist.

13. Verfahren zur Wärmebehandlung von Lebensmittelprodukten nach irgendeinem der vorgehenden Ansprüche, **dadurch gekennzeichnet, dass** die Lebensmittelprodukte während einer Zeit (Dc) erwärmt werden, die abhängig von der Größe der Stücke dieser Lebensmittelprodukte bestimmt wird, wobei diese Zeit (Dc) zwischen 2 und 40 Minuten liegt.

14. Verfahren zur Wärmebehandlung von Lebensmittelprodukten nach irgendeinem der vorgehenden Ansprüche, **dadurch gekennzeichnet, dass** die Menge des eingespritzten wärmeabführenden Fluidums abhängig von der Erwärmungszeit (Dc), der Temperatur, nämlich der Grenztemperatur (T1) und/oder der Bezugstemperatur (Tr), und von dem Gewicht der Lebensmittelprodukte, sogar von dem Gewicht der flüssigen Lösung bestimmt wird.

15. Verfahren zur Wärmebehandlung von Lebensmittelprodukten nach irgendeinem der vorgehenden Ansprüche, **dadurch gekennzeichnet, dass** der Vakuumdruck, die Temperatur und das Gewicht der Lebensmittelprodukte periodisch gemessen werden, um das Vakuum und/oder die Erwärmungsparameter, nämlich die Menge und die Dauer des Einspritzens von wärmeabführendem Fluidum zu justieren.

16. Vorrichtung (1) zum Durchführen des Verfahrens nach irgendeinem der vorgehenden Ansprüche, **dadurch gekennzeichnet, dass** sie folgendes umfaßt :
- einen Behälter (2) zum Aufnehmen der nach diesem Verfahren zu behandelnden Lebensmittelprodukte sowie der flüssigen Lösung ;
- ein Gestell (7), auf dem der besagte Behälter (2) drehbar gelagert ist ;
- ein Mittel (8), um diesen Behälter (2) in Drehung anzutreiben ;
- eine Vakuumpumpe (5) ;
- ein Mittel (6) zum Liefern von wärmeabführendem Fluidum ;
- Mittel (12) zum Messen des Gewichts von wenigstens dem Inhalt des Behälters (2) ;
- Mittel (13) zum Messen der Temperatur innerhalb des Behälters (2) ;
- Mittel (14) zum Messen des Drucks innerhalb dieses Behälters (2) ;
- Mittel (15) zum Steuern des Ablaufs des Verfahrens zur Wärmebehandlung.
